# EUROPÄISCHE PATENTANMELDUNG

(11) **EP 4 814 790 A1**
(43) Veröffentlichungstag der Anmeldung: **30.09.2026**
(21) Anmeldenummer: 25166697.0
(22) Anmeldetag: 27.03.2025
(51) Int. Cl.: G06N 3/045, G06T 7/00, G06V 10/82

(54) **VERFAHREN UND SYSTEM ZUM ERKENNEN EINES OBJEKTS IN EINEM BILD**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Computer-implementiertes Verfahren zum Erkennen eines Objekts in einem digitalen Bild durch ein Klienten-Server-System, wobei folgende Schritte ausgeführt werden:
a) Bereitstellen einer jeweiligen Menge an lokalen Trainingsbildern an einen der zumindest zwei Klienten, wobei jedes lokale Trainingsbild aus der Menge eine Abbildung des Objekts umfasst, und die Abbildung eine zulässige oder eine unzulässige Repräsentation des Objekts beinhaltet, welche als solche gekennzeichnet ist,
b) Erzeugen und Trainieren eines jeweiligen lokalen Einbettungs-Modells auf Basis künstlicher Intelligenz für ein Merkmal des Objekts, durch den jeweiligen Klienten aus der jeweiligen Menge an lokalen Trainingsbildern mithilfe eines, dem jeweiligen Klienten jeweils bereitgestellten Encoders in Form eines neuronalen Netzwerks mit Eingangsknoten, Zwischenlagen und Ausgangsknoten, wobei die Anzahl der Ausgangsknoten kleiner als die Anzahl der Eingangsknoten ist, und das Einbettungs-Modell durch die Ausgangsknoten des Encoders gebildet ist,
c) Übermitteln des jeweiligen lokalen Einbettungs-Modells vom jeweiligen Klienten an den Server, und Aggregieren der jeweiligen lokalen Einbettungs-Modelle zu einem globalen Einbettungs-Modell, und Verteilen des globalen Einbettungs-Modells an zumindest einen der zumindest zwei Klienten,
d) Erfassen eines aktuellen Bildes von einem hergestellten Produkt, welches eine Repräsentation des Objekts umfasst,
e) Durchführen einer Merkmalsanalyse durch Anwendung des jeweiligen lokalen Einbettungs-Modells, und Erkennen des Objekts im aktuellen Bild bei Vorliegen eines entsprechenden Merkmals des Objekts.

## Beschreibung

Die Erfindung betrifft ein computer-implementiertes Verfahren und ein System zum Erkennen eines Objekts in einem digitalen Bild.

Die Erfindung betrifft ferner ein Computer-Programm-Produkt.

Die Entwicklung eines Basis-Modells oder Grund-Modells (engl. "foundation model", kurz FM) für die visuelle Qualitätsprüfung in der Industrie bietet mehrere Schlüsselfunktionen, die die betriebliche Effizienz und die Qualitätskontrollprozesse erheblich verbessern.

Eine der zentralen Funktionen ist das sogenannte "Zero-Shot"-Lernen, das es dem Modell ermöglicht, Fehler oder Anomalien zu erkennen und zu klassifizieren, ohne dass jede mögliche Variation explizit trainiert werden muss.

Dies bedeutet, dass das Modell effektiv generalisieren kann, um neue oder bisher unsichtbare Fehler basierend auf seinem Verständnis der zugrunde liegenden Muster und Merkmale zu identifizieren, wodurch der Bedarf an umfangreichen gekennzeichneten Trainingsdaten reduziert wird.

Durch die Nutzung fortschrittlicher Techniken des maschinellen Lernens wie Zero-Shot-Learning kann das Grund-Modell aus vorhandenem Wissen extrapolieren, um Fehler auch in Szenarien, in denen beschriftete Beispiele begrenzt oder nicht verfügbar sind, genau zu erkennen und zu klassifizieren.

Diese Funktion rationalisiert nicht nur den Modelltrainingsprozess, sondern ermöglicht auch eine schnelle Anpassung an sich ändernde Anforderungen an die Qualitätsprüfung und dynamische Produktionsumgebungen.

Darüber hinaus verbessert die Fähigkeit des Modells, über verschiedene Produkttypen, Materialien oder Herstellungsprozesse hinweg zu verallgemeinern, seinen Nutzen und seine Anwendbarkeit in verschiedenen industriellen Umgebungen weiter zu verbessern.

Darüber hinaus reduziert die Fähigkeit des grundlegenden Modells zum Zero-Shot-Lernen und zur Generalisierung den für das Training erforderlichen Markierungsaufwand erheblich.

Traditionell kann die Kennzeichnung großer Datenmengen für überwachtes Lernen arbeitsintensiv, zeitaufwändig und kostspielig sein.

Diese Reduzierung des Beschriftungsaufwands beschleunigt nicht nur den Lebenszyklus der Modellentwicklung, sondern minimiert auch die Belastung der menschlichen Annotatoren, sodass sie sich auf komplexe oder feinabgestimmte Qualitätsprüfungsaufgaben konzentrieren können.

Das Training eines Grund-Modells in der Industrie ist aufgrund der begrenzten und fragmentierten Datenverfügbarkeit in den verschiedenen Abteilungen eines Unternehmens eine Herausforderung.

Im Gegensatz zu Modellen, die mit Internetdaten trainiert wurden, sind industrielle Datensätze proprietär, sensibel und unterliegen strengen Datenschutzbestimmungen, was zu Datensilos und Interoperabilitätsproblemen führt.

Die Heterogenität der Datenformate, der Qualität und der Kennzeichnungsstandards erschwert die Datenintegration und erfordert eine umfangreiche Vorverarbeitung und Harmonisierung. Die Knappheit an beschrifteten Daten verschärft die Herausforderungen weiter und erfordert kostspielige und zeitaufwändige manuelle Annotationsarbeiten.

Die Bewältigung dieser Herausforderungen erfordert Zusammenarbeit, Koordination und robuste Data-Governance-Frameworks, um einen effektiven Datenaustausch und die Einhaltung gesetzlicher Anforderungen zu gewährleisten.

Ein Datenkatalog ist ein zentrales Repository, in welchem Metadaten und Informationen zu den Datenbeständen einer Organisation organisiert sind.

Es bietet einen umfassenden Überblick über die verfügbaren Datenressourcen, einschließlich Beschreibungen, Metadaten und Datenqualitäts-Metriken.

Zugriffsrichtlinien und Berechtigungen sind häufig enthalten, um anzugeben, wer auf die Daten zugreifen oder diese ändern kann, zusammen mit relevanten Sicherheitseinschränkungen.

Nutzungsstatistiken verfolgen die Datennutzung und bieten Einblicke in die Häufigkeit und den Zugriff auf Datensätze zu welchen Zwecken.

Informationen zum Dateneigentum identifizieren die Personen oder Teams, die für die Verwaltung und Pflege jedes Datensatzes innerhalb des Katalogs verantwortlich sind.

Ein Datenkatalog ist in der Industrie aus mehreren Gründen besonders wichtig für das Training industrieller Grundlagenmodelle.

Das Problem bestehender Datenkataloge hinsichtlich der Auffindbarkeit geeigneter Datensätze liegt in ihrer Unfähigkeit, Datensätze effektiv nach Relevanz und Qualität zu filtern und zu ordnen.

Benutzer können Schwierigkeiten haben, inmitten einer großen Menge an Einträgen die am besten geeigneten Datensätze zu finden, was zu Ineffizienzen im Datenermittlungsprozess führt.

Ein typisches Beispiel für den Stand der Technik in diesem Zusammenhang ist ein Konzept mit sogenannten "Crawlern" bei der Entdeckung von Datenquellen über verschiedene Plattformen hinweg, welches darauf basiert Daten von mehrerer Datenquellen abzurufen und anschließend einen eigenen Katalog mit relevanten Metadaten zu befüllen.

Der bekannte AWS "Glue"-Datenkatalog und die entsprechenden Crawling-Funktionen stellen jedoch einen erheblichen Nachteil für den Datenschutz dar, da sensible Metadaten möglicherweise offengelegt werden, wenn die Sicherheitsmaßnahmen unzureichend sind.

Automatisierte Crawling-Prozesse können versehentlich Verbindungen zwischen Datensätzen aufdecken und so die Offenlegung vertraulicher Informationen riskieren.

Darüber hinaus kann eine ungenaue Kategorisierung oder Beschriftung von Metadaten innerhalb des Katalogs zu Datenschutzverletzungen oder Compliance-Problemen führen.

Es ist daher Aufgabe der Erfindung ein sicheres Verfahren zur visuellen Qualitätsinspektion unter Wahrung der Privatsphäre und Integrität, sowie unter Berücksichtigung des Datenschutzes und der Abhörsicherheit bereitzustellen, welches die Modell-Genauigkeit und die Robustheit und Anpassungsfähigkeit des Modells verbessert, insbesondere auch für domänenspezifische Merkmale, auch wenn ein einzelner Klient eines Systems nur über einen kleinen Datensatz für ein entsprechendes Modell-Training verfügt, im System aber weitere Trainings-Datensätze verfügbar sind.

Die erfindungsgemäße Aufgabe wird durch ein computer-implementiertes Verfahren zum Erkennen eines Objekts in einem digitalen Bild durch ein Klienten-Server-System gelöst, umfassend einen Server und zumindest zwei Klienten, wobei folgende Schritte ausgeführt werden:
a) Bereitstellen einer jeweiligen Menge an lokalen Trainingsbildern an einen der zumindest zwei Klienten, wobei jedes lokale Trainingsbild aus der Menge eine Abbildung des Objekts umfasst, und die Abbildung eine zulässige oder eine unzulässige Repräsentation des Objekts beinhaltet, welche als solche gekennzeichnet ist,
b) Erzeugen und Trainieren eines jeweiligen lokalen Einbettungs-Modells auf Basis künstlicher Intelligenz für ein Merkmal des Objekts, durch den jeweiligen Klienten aus der jeweiligen Menge an lokalen Trainingsbildern mithilfe eines, dem jeweiligen Klienten jeweils bereitgestellten Encoders in Form eines neuronalen Netzwerks mit Eingangsknoten, Zwischenlagen und Ausgangsknoten, wobei die Anzahl der Ausgangsknoten kleiner als die Anzahl der Eingangsknoten ist, und das Einbettungs-Modell durch die Ausgangsknoten des Encoders gebildet ist,
c) Übermitteln des jeweiligen lokalen Einbettungs-Modells vom jeweiligen Klienten an den Server, und Aggregieren der jeweiligen lokalen Einbettungs-Modelle zu einem globalen Einbettungs-Modell, durch den Server, und Verteilen des globalen Einbettungs-Modells an zumindest einen der zumindest zwei Klienten,
d) Erfassen eines aktuellen Bildes von einem hergestellten Produkt, welches eine Repräsentation des Objekts umfasst, durch einen jeweiligen Klienten,
e) Durchführen einer Merkmalsanalyse durch Anwendung des jeweiligen lokalen Einbettungs-Modells, und Erkennen des Objekts im aktuellen Bild bei Vorliegen eines entsprechenden Merkmals des Objekts, durch den jeweiligen Klienten.

Das Verfahren nutzt Techniken des föderierten Lernens (engl "federated learning", kurz FL), um die Einbettung von Darstellungen, die aus verschiedenen Bilddatensätzen über mehrere Qualitätsprüfungsbereiche hinweg gelernt wurden, zu aggregieren und gleichzeitig den Datenschutz und die Vertraulichkeit, und somit die Systemsicherheit zu wahren

Dadurch wird die Wahrung der Privatsphäre erreicht, denn die Daten bleiben bei jedem Datenbesitzer lokal, um Vertraulichkeit und Datenschutz zu gewährleisten, was die Systemsicherheit und die Integrität verbessert.

Außerdem werden domänenspezifische Einbettungen (engl. "embeddings") bereitgestellt, wobei die Einbettungsmodelle sind auf den spezifischen Bereich der Qualitätsprüfung jedes Datenbesitzers zugeschnitten und erfassen relevante visuelle Merkmale effektiv.

Ferner wird kollaboratives Lernen unterstützt, denn die Datenbesitzer tragen zu einem kollektiven Modell bei, ohne dabei Rohbilddaten auszutauschen.

Zusätzlich kann eine Generalisierung erreicht werden, bei welcher aggregierte Einbettungen über verschiedene Qualitätsprüfungsszenarien hinweg verallgemeinert werden können, wodurch die Robustheit und Anpassungsfähigkeit des Modells verbessert wird.

In einer Weiterbildung der Erfindung ist es vorgesehen, dass außerdem folgende Schritte ausgeführt werden:
i) Bereitstellen einer jeweiligen Menge an globalen Trainingsbildern an den Server, wobei jedes globalen Trainingsbild aus der Menge eine Abbildung des Objekts umfasst, und die Abbildung eine zulässige oder eine unzulässige Repräsentation des Objekts beinhaltet, welche als solche gekennzeichnet ist,
ii) Anwenden des globalen Einbettungs-Modells auf die Menge an globalen Trainingsbildern,
iii) Bestimmen der Ähnlichkeit mithilfe einer Ähnlichkeitsfunktion zwischen dem globalen Einbettungs-Modell und den jeweiligen lokalen Einbettungs-Modellen, und Ermitteln zumindest eines lokalen Einbettungs-Modells, welches in einem vorab festgelegten Wertebereich für die Ähnlichkeit liegt,
iv) Abrufen der jeweiligen Menge an lokalen Trainingsbildern anhand des zuvor ermittelten zumindest einen lokalen Einbettungs-Modells von dessen jeweiligen Klient,
v) Trainieren eines bereitgestellten Grund-Modells auf Basis künstlicher Intelligenz mit der zuvor zumindest einen abgerufenen jeweiligen Menge an lokalen Trainingsbildern,
vi) Erfassen eines aktuellen Bildes von einem hergestellten Produkt, welches eine Repräsentation des Objekts umfasst,
vii) Erkennen des Objekts im aktuellen Bild durch Anwendung des Grund-Modells.

In einer Weiterbildung der Erfindung ist es vorgesehen, dass das Grund-Modell ein "Residual Neural Network", RNN, ein "deep Convolutional Neural Network", DNN, nach dem Standard der "Visual Geometry Group", VGG, oder ein "EfficientNet" ist.

Dadurch wird erreicht, dass ein für die Objekterkennung besonders vorteilhaftes Grund-Modell verwendet wird.

Das Standardisierungsgremium "Visual Geometry Group" hat eine Architektur mit einem tiefen Convolutional Neural Network (kurz CNN) mit mehreren Schichten definiert, auch tiefe neuronale Netzwerke (engl. "deep neuronal network", kurz DNN) genannt, um die Tiefe von CNNs zu erhöhen und so die Modellleistung zu steigern, wobei sich das "tief" sich auf die Anzahl der Schichten bezieht, und beispielsweise VGG-16 oder VGG-19 aus 16 bzw. 19 Faltungsschichten besteht.

Um bessere Ergebnisse von Modellen nach dem Prinzip des maschinellen Lernens erzielen zu können, wurden die genutzten Architekturen im Laufe der Zeit immer tiefer und tiefer und es wurden einfach mehrere CNN-Blöcke aufeinandergestapelt in der Erwartung, dadurch bessere Ergebnisse erzielen zu können.

Jedoch ergibt sich bei DNNs die Problematik des sogenannten "Vanishing Gradients".

Das Training eines Netzwerkes passiert während der sogenannten "Backpropagation", wobei, kurz gesagt, der Fehler das Netzwerk von hinten nach vorne durchwandert.

In jeder Schicht wird berechnet, wie stark das jeweilige Neuron zum Fehler beigetragen hat, indem der Gradient berechnet wird.

Umso mehr sich dieser Prozess jedoch den anfänglichen Schichten nähert, umso kleiner kann auch der Gradient werden, sodass es in den vorderen Schichten zu keiner oder nur sehr leichten Anpassung von Neuronen-Gewichtungen kommt.

Dadurch haben tiefe Netzwerkstrukturen häufig einen vergleichsweise hohen Fehler, der sich beispielsweise in einer unzureichenden Modellgenauigkeit ausdrücken kann.

Die abnehmende Modell-Genauigkeit kann jedoch nicht nur auf das "Vanishing Gradient"-Problem zurückgeführt werden.

Mit sogenannten "Batch Normalization Layern" kann dieses Problem aber relativ gut in den Griff bekommen werden.

Die Tatsache, dass tiefe Neuronale Netzwerke DNN eine schlechtere Performance haben, kann weiterhin auch an der Initialisierung der Schichten liegen oder an der verwendeten Optimierungsfunktion.

Der Grundbaustein eines "Residual Neural Networks", kurz RNN, sind die sogenannten Residual Blocks, wobei sogenannte "Skip Connections" in das Netzwerk eingebaut werden.

Diese sorgen dafür, dass die Aktivierung einer Schicht mit dem Output einer späteren Schicht zusammenaddiert werden.

Diese Architektur ermöglicht es dem Netzwerk gewisse Schichten einfach zu überspringen, vor allem dann, wenn sie nichts zu einem besseren Ergebnis beitragen.

Ein RNN setzt sich aus mehreren von diesen sogenannten "Residual Blocks" zusammen.

EfficientNet ist eine CNN-Architektur und Skalierungsmethode, die alle Dimensionen von Tiefe/Breite/Auflösung mithilfe eines zusammengesetzten Koeffizienten einheitlich skaliert.

Im Gegensatz zur herkömmlichen Praxis, bei der diese Faktoren willkürlich skaliert werden, skaliert die Skalierungsmethode von EfficientNet die Netzwerkbreite, -tiefe und -auflösung mithilfe eines Satzes fester Skalierungskoeffizienten einheitlich.

Wenn beispielsweise temporär mehr Rechenressourcen verwenden werden sollen, kann die Netzwerktiefe, die Breite und die Bildgröße um konstante Koeffizienten erhöht werden, wobei die Koeffizienten durch eine kleine Rastersuche auf dem ursprünglichen kleinen Modell bestimmt werden.

EfficientNet verwendet einen zusammengesetzten Koeffizienten, um die Netzwerkbreite, -tiefe und -auflösung auf prinzipielle Weise einheitlich zu skalieren.

Bei der zusammengesetzten Skalierungsmethode wird der Intuition gefolgt, dass das Netzwerk bei einem größeren Eingabebild mehr Schichten benötigt, um das rezeptive Feld zu vergrößern, und mehr Kanäle, um feinkörnigere Muster auf dem größeren Bild zu erfassen.

Die Menge an Trainingsbildern umfasst zumindest ein Trainingsbild, welches eine ähnliche Abbildung des Objekts umfasst, wobei die Ähnlichkeit anhand einer Distanzfunktion bestimmt wird, deren Wert in einem vorbestimmten Wertebereich liegt.

Somit sind zwei Bilder zueinander ähnlich, wenn deren Merkmale ineinander überführt werden können, beispielsweise durch Transformationen.

Mit anderen Worten kann die Ähnlichkeit, also das Maß der Ähnlichkeit der Abbildung des Objekts zu einem entsprechenden Objektmodell, alternativ anhand einer Verlustfunktion bestimmt werden, deren Wert in einem vorbestimmten Wertebereich liegt.

In einer Weiterbildung der Erfindung ist es vorgesehen, dass der jeweilige Encoder durch den Encoder eines jeweiligen Autoencoders gebildet ist.

Der Autoencoder umfasst einen Encoder und einen Decoder.

Die erfindungsgemäße Aufgabe wird auch durch ein Klienten-Server-System zum Erkennen eines Objekts in einem digitalen Bild gelöst, umfassend einen Server und zumindest zwei Klienten mit jeweiligen Rechenvorrichtungen, wobei das System dazu eingerichtet ist, das Verfahren nach einem der vorhergehenden Ansprüche auszuführen.

Die Rechenvorrichtungen des Servers und der Klienten umfassen jeweils einen Prozessor mit einem Speicher.

In einer Weiterbildung der Erfindung ist es vorgesehen, dass ferner einen bildgebenden Sensor umfasst, welcher dazu eingerichtet ist, ein hergestelltes Produkt als Objekt mithilfe eines digitalen Bilds zu erfassen.

Die erfindungsgemäße Aufgabe wird auch durch ein Computer-Programm-Produkt gelöst, umfassend Befehle, die bei der Ausführung des Programms durch das erfindungsgemäße Klienten-Server-System dieses veranlassen, das erfindungsgemäße Verfahren/die Schritte des erfindungsgemäßen Verfahrens auszuführen.

In den nachfolgenden Figuren ist ein Ausführungsbeispiel der Erfindung gezeigt.
- Fig. 1: ein Ausführungsbeispiel der Erfindung in Form eines Ablaufdiagramms,
- Fig. 2: ein Ausführungsbeispiel der Erfindung in Form eines Systems.

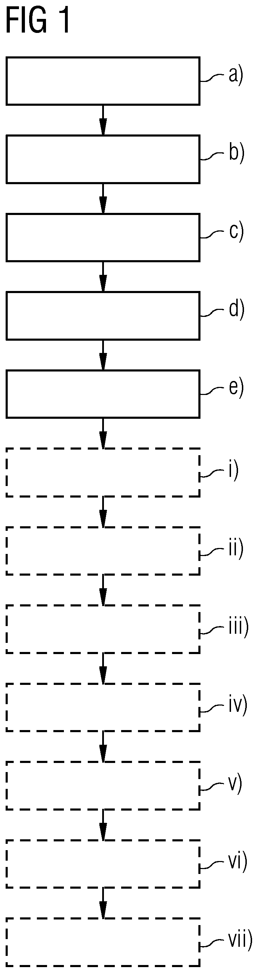

**Fig. 1** stellt ein Ausführungsbeispiel der Erfindung in Form eines Ablaufdiagramms als Verfahren zum Erkennen eines Objekts in einem digitalen Bild durch ein Klienten-Server-System.

Zumindest ein Verfahrens-Schritt ist in einen Computer implementiert.

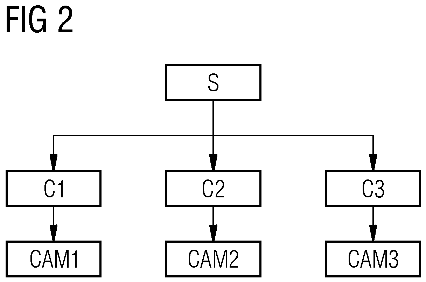

Das System umfasst einen Server und zumindest zwei Klienten gemäß Fig. 2.

Folgende Schritte werden ausgeführt:
a) Bereitstellen einer jeweiligen Menge an lokalen Trainingsbildern an einen der zumindest zwei Klienten, wobei jedes lokale Trainingsbild aus der Menge eine Abbildung des Objekts umfasst, und die Abbildung eine zulässige oder eine unzulässige Repräsentation des Objekts beinhaltet, welche als solche gekennzeichnet ist,
b) Erzeugen und Trainieren eines jeweiligen lokalen Einbettungs-Modells auf Basis künstlicher Intelligenz für ein Merkmal des Objekts, durch den jeweiligen Klienten aus der jeweiligen Menge an lokalen Trainingsbildern mithilfe eines, dem jeweiligen Klienten jeweils bereitgestellten Encoders in Form eines neuronalen Netzwerks mit Eingangsknoten, Zwischenlagen und Ausgangsknoten, wobei die Anzahl der Ausgangsknoten kleiner als die Anzahl der Eingangsknoten ist, und das Einbettungs-Modell durch die Ausgangsknoten des Encoders gebildet ist,
c) Übermitteln des jeweiligen lokalen Einbettungs-Modells vom jeweiligen Klienten an den Server, und Aggregieren der jeweiligen lokalen Einbettungs-Modelle zu einem globalen Einbettungs-Modell, durch den Server, und Verteilen des globalen Einbettungs-Modells an zumindest einen der zumindest zwei Klienten,
d) Erfassen eines aktuellen Bildes von einem hergestellten Produkt, welches eine Repräsentation des Objekts umfasst, durch einen jeweiligen Klienten,
e) Durchführen einer Merkmalsanalyse durch Anwendung des jeweiligen lokalen Einbettungs-Modells, und Erkennen des Objekts im aktuellen Bild bei Vorliegen eines entsprechenden Merkmals des Objekts, durch den jeweiligen Klienten.

Ein Klient kann ein sogenannter "Datenbesitzer" (engl. "data catalog owner") sein, also ein System zur visuellen Qualitätsinspektion bei der Herstellung von Produkten.

Ein Klient kann von einem weiteren Klienten im System insofern unabhängig sein, als die Inspektionssysteme verschiedenen Hersteller administrativ zugeordnet werden können.

Jedoch soll die Inspektionsaufgabe zuverlässig gelöst werden und so wenig Daten wie möglich Die Abbildung kann eine zulässige oder eine unzulässige Repräsentation des Objekts beinhalten, wie beispielsweise mit korrekten oder defekten Produkten oder Anomalien im Produkt oder Produktumfeld.

Das Lernen der Bild-Einbettung von Darstellungen kann beispielsweise erfolgen, indem ein "Convolutional Neural Network" (kurz CNN) mit lokal verfügbaren Bilddatensätze trainiert wird.

Dabei ist ein CNN-Modell darauf trainiert, ein oder mehrere aussagekräftige Merkmale aus den Bildern zu extrahieren und relevante Merkmale für Qualitätsprüfungsaufgaben zu erfassen.

Dabei können Transfer-Lerntechniken unter Verwendung von vortrainierten Modellen wie ResNet, VGG oder EfficientNet können eingesetzt werden, um den Trainingsprozess zu beschleunigen und die Leistung zu verbessern, insbesondere bei begrenzten lokalen Daten.

Das erzeugte lokale Einbettungs-Modell wird dann nach dem Prinzip des föderierten Lernen am Server mit weiteren lokalen Einbettungs-Modellen anderer Klienten aggregiert, beispielsweise durch Mittelwertbildung der einzelnen Modell-Gewichte, wodurch eine Datensicherheit, Vertraulichkeit von Daten, beziehungsweise Datenschutz gewährleistet werden kann.

Insbesondere Techniken wie föderierte Mittelwertbildung oder "secure multi-party computation", kurz SMPC, können verwendet werden, um die Einbettungen zu aggregieren.

Das Verfahren sowie die nachfolgenden Verbesserungen können iterative angewandt werden, um schrittweise eine Verbesserung der jeweiligen Modelle zu erreichen, beispielsweise auch nur durch einzelne Klienten, welche dennoch eine Aktualisierung des globalen Modells veranlassen.

Die Modell-Aggregation kann beispielsweise gewichtet erfolgen: $AEM = ω * LEM + \left(1-ω\right) * GEM$ wobei
- ω: ein gewähltes Gewicht,
- AEM: das aggregierte Bild-Einbettungs-Modell,
- LEM: das lokale Bild-Einbettungs-Modell, und
- GEM: das globale Bild-Einbettungs-Modell ist.

Dadurch kann ein Anwenden einer Personalisierung erfolgen, wobei der Aggregationsschritt eine gewichtete Kombination aus dem LEM und dem GEM umfasst, und das Gewicht ω das Gleichgewicht zwischen den beiden Modellen steuert, was eine flexible Anpassung des Einflusses der lokalen und globalen Modelle auf den föderierten Lernprozess ermöglicht.

In einem spezifischen Anwendungsfall können relevante Datensätze mithilfe eines Basis- oder Grund-Modells (engl. "foundation model", kurz FM) ermittelt werden.

Dabei zielt ein Benutzer, wie eine Daten-Wissenschaftler darauf ab, ein Grund-Modell für Qualitätsprüfungsaufgaben zu trainieren.

Dem Benutzer stehen einige Beispielbilder zur Verfügung, welche die Aufgaben der Qualitätsprüfung darstellen, wie beispielsweise das Training des Grund-Modells für die Automobilindustrie für das Presswerk.

Unter Nutzung des globalen Einbettungs-Modells versucht der Benutzer, Datensatzbesitzer "data catalog owner", kurz DCO) von anderen Klienten des Klienten-Server-Systems zu identifizieren, deren Datensätze, die im Einbettungsbereich dargestellt werden, eng mit den bereitgestellten Bildern übereinstimmen.

Auf diese Weise kann der Benutzer relevante Trainingsdaten von diesen Klienten sammeln, um ein robustes Grund-Modell zu trainieren.

Das Verfahren kann somit, optional (in der Figur strichliert eingezeichnet), außerdem folgende Schritte aufweisen:
i) Bereitstellen einer jeweiligen Menge an globalen Trainingsbildern an den Server, wobei jedes globalen Trainingsbild aus der Menge eine Abbildung des Objekts umfasst, und die Abbildung eine zulässige oder eine unzulässige Repräsentation des Objekts beinhaltet, welche als solche gekennzeichnet ist,
ii) Anwenden des globalen Einbettungs-Modells auf die Menge an globalen Trainingsbildern,
iii) Bestimmen der Ähnlichkeit mithilfe einer Ähnlichkeitsfunktion zwischen dem globalen Einbettungs-Modell und den jeweiligen lokalen Einbettungs-Modellen, und Ermitteln zumindest eines lokalen Einbettungs-Modells, welches in einem vorab festgelegten Wertebereich für die Ähnlichkeit liegt,
iv) Abrufen der jeweiligen Menge an lokalen Trainingsbildern anhand des zuvor ermittelten zumindest einen lokalen Einbettungs-Modells von dessen jeweiligen Klient,
v) Trainieren eines bereitgestellten Grund-Modells auf Basis künstlicher Intelligenz mit der zuvor zumindest einen abgerufenen jeweiligen Menge an lokalen Trainingsbildern,
vi) Erfassen eines aktuellen Bildes von einem hergestellten Produkt, welches eine Repräsentation des Objekts umfasst,
vii) Erkennen des Objekts im aktuellen Bild durch Anwendung des Grund-Modells.

Dabei kann das Grund-Modell ein "Residual Neural Network", RNN, ein "deep Convolutional Neural Network", DNN, nach dem Standard der "Visual Geometry Group", VGG, oder ein "EfficientNet" sein.

Der jeweilige Encoder kann bevorzugt durch den Encoder eines jeweiligen Autoencoders gebildet sein.

Der jeweilige Autoencoder weist einem Encoder und einem Decoder auf.

Mit anderen Worten kann eine Einbettungs-basierte Vorhersage im Schritt iii) erfolgen, indem der Server bereitgestellte Bilder empfängt, und mithilfe des verfügbaren globalen Einbettungs-Modells prognostiziert, welche Klienten Bilddaten-Sätze aufweisen, die im Einbettungsraum Ähnlichkeiten mit den aus den Bildern extrahierten Merkmalen aufweisen.

Diese Vorhersage kann auf der Nähe, also auf einer kurzen mathematischen Distanz der Einbettungen der Eingabebilder zu den Einbettungen von Datensätzen, die von verschiedenen DCOs gehalten werden, basieren.

Der Benutzer kann dadurch jene Klienten identifizieren, deren Bilddaten eng an den Eingabebildern ausgerichtet sind, wie vom globalen Einbettungsmodell vorhergesagt.

Diese Klienten gelten als relevant für die Bereitstellung derer lokalen Trainingsdaten zum ergänzenden Trainieren des Grund-Modells, da ihre Datasets wahrscheinlich ähnliche qualitätsbezogene Merkmale oder Muster enthalten.

Der Benutzer kommuniziert dementsprechend im Schritt iv) mit den identifizierten Klienten, um Zugriff auf ihre Datensätze oder spezifische Proben zu erhalten, die für die Qualitätsprüfungsaufgabe relevant sind.

Sie sammeln somit gekennzeichnete Trainingsdaten von diesen Klienten, die Bilder von Produkten, Fehlern oder Anomalien zusammen mit entsprechenden Bezeichnungen enthalten können.

Anschließend erfolgt ein Training des Grund-Modells im Schritt v) unter Verwendung der gesammelten lokalen Trainingsdaten, wie beispielsweise ein transformatorbasiertes Modell in Kombination mit CNN-Schichten für die Merkmalsextraktion, um Qualitätsprüfungsaufgaben durchzuführen.

Dann kann optional eine Modellbewertung und -validierung erfolgen, bei welcher der Benutzer das trainierte Grund-Modell anhand von Validierungsdatensätzen oder anhand realer Testszenarien bewertet.

Sobald der Benutzer mit der Leistung zufrieden ist, kann das trainierte Grund-Modell für automatisierte Qualitätsprüfungsaufgaben bei seinem Klienten angewendet werden.

Das Grund-Modell kann anhand relevanter Klienten, die durch das globale Einbettungsmodell identifiziert werden, auf Genauigkeit getestet werden, um Robustheit und Generalisierung des Modells zu gewährleisten.

Der Benutzer wählt insbesondere solche Klienten in der Nähe des Einbettungsbereichs aus, deren Daten nicht beim Trainieren des Grund-Modells verwendet wurden, um seine Leistung über verschiedene Datasets hinweg zu validieren.

Diese Testphase überprüft die Fähigkeit des Modells, auf unsichtbare Daten zu verallgemeinern, und stellt seine Wirksamkeit bei der Erkennung von Fehlern oder Anomalien in verschiedenen Produktlinien oder Qualitätsprüfungsszenarien sicher.

Nach erfolgreicher Validierung kann das Grund-Modell nahtlos in die Produktionsprozesse integriert werden und trägt so zur Aufrechterhaltung hoher Standards in Bezug auf Produktqualität und -effizienz bei.

Durch das beschriebene Verfahren kann eine visuelle Qualitätsinspektion unter Wahrung der Privatsphäre erfolgen, denn die Bild-Daten bleiben bei jedem Klienten lokal, um Vertraulichkeit und Datenschutz zu gewährleisten.

Ferner können domänenspezifische Einbettungen umgesetzt werden, wobei die Einbettungs-Modelle auf einen spezifischen Bereich der Qualitätsprüfung jedes Klienten zugeschnitten sein können und relevante visuelle Merkmale sehr effektiv erfassen können.

Durch das "kollaborative Lernen" können Klienten zu einem kollektiven Modell beitragen, ohne Rohbilddaten auszutauschen.

Es kann außerdem eine Modell-Generalisierung erfolgen, denn aggregierte Einbettungen können über verschiedene Qualitätsprüfungsszenarien hinweg verallgemeinert werden, wodurch die Robustheit und Anpassungsfähigkeit des Modells verbessert wird.

**Fig. 2** zeigt ein Ausführungsbeispiel der Erfindung in Form eines Systems.

Das Klienten-Server-System zum Erkennen eines Objekts in einem digitalen Bild umfasst einen Server S und zumindest zwei Klienten C1-C3 mit jeweiligen Rechenvorrichtungen und jeweilig verbundenen Kameras CAM1-CAM3 zur Erfassung von Bildern von hergestellten Produkten.

Das Klienten-Server-System ist dazu eingerichtet, das erfindungsgemäße Verfahren nach Fig. 1 auszuführen.

Der bildgebende Kamera-Sensor CAM1 ist dazu eingerichtet, ein hergestelltes Produkt als Objekt mithilfe eines digitalen Bilds zu erfassen.

Entsprechende Sensordaten des Sensors CAM1 werden vom Klienten C1 als Bilddaten im Verfahren weiterverarbeitet.

*Unabhängig vom grammatikalischen Geschlecht eines bestimmten Begriffes sind Personen mit männlicher, weiblicher oder anderer Geschlechteridentität mit umfasst.*

### Bezugszeichenliste

- S: Server
- C1-C3: Klient
- CAM1-CAM3: bildgebender Sensor

## Patentansprüche

1. Computer-implementiertes Verfahren zum Erkennen eines Objekts in einem digitalen Bild durch ein Klienten-Server-System, umfassend einen Server und zumindest zwei Klienten, wobei folgende Schritte ausgeführt werden:
a) Bereitstellen einer jeweiligen Menge an lokalen Trainingsbildern an einen der zumindest zwei Klienten, wobei jedes lokale Trainingsbild aus der Menge eine Abbildung des Objekts umfasst, und die Abbildung eine zulässige oder eine unzulässige Repräsentation des Objekts beinhaltet, welche als solche gekennzeichnet ist,
b) Erzeugen und Trainieren eines jeweiligen lokalen Einbettungs-Modells auf Basis künstlicher Intelligenz für ein Merkmal des Objekts, durch den jeweiligen Klienten aus der jeweiligen Menge an lokalen Trainingsbildern mithilfe eines, dem jeweiligen Klienten jeweils bereitgestellten Encoders in Form eines neuronalen Netzwerks mit Eingangsknoten, Zwischenlagen und Ausgangsknoten, wobei die Anzahl der Ausgangsknoten kleiner als die Anzahl der Eingangsknoten ist, und das Einbettungs-Modell durch die Ausgangsknoten des Encoders gebildet ist,
c) Übermitteln des jeweiligen lokalen Einbettungs-Modells vom jeweiligen Klienten an den Server, und Aggregieren der jeweiligen lokalen Einbettungs-Modelle zu einem globalen Einbettungs-Modell, durch den Server, und Verteilen des globalen Einbettungs-Modells an zumindest einen der zumindest zwei Klienten,
d) Erfassen eines aktuellen Bildes von einem hergestellten Produkt, welches eine Repräsentation des Objekts umfasst, durch einen jeweiligen Klienten,
e) Durchführen einer Merkmalsanalyse durch Anwendung des jeweiligen lokalen Einbettungs-Modells, und Erkennen des Objekts im aktuellen Bild bei Vorliegen eines entsprechenden Merkmals des Objekts, durch den jeweiligen Klienten.

2. Verfahren nach dem vorhergehenden Anspruch, wobei außerdem folgende Schritte ausgeführt werden:
i) Bereitstellen einer jeweiligen Menge an globalen Trainingsbildern an den Server, wobei jedes globalen Trainingsbild aus der Menge eine Abbildung des Objekts umfasst, und die Abbildung eine zulässige oder eine unzulässige Repräsentation des Objekts beinhaltet, welche als solche gekennzeichnet ist,
ii) Anwenden des globalen Einbettungs-Modells auf die Menge an globalen Trainingsbildern,
iii) Bestimmen der Ähnlichkeit mithilfe einer Ähnlichkeitsfunktion zwischen dem globalen Einbettungs-Modell und den jeweiligen lokalen Einbettungs-Modellen, und Ermitteln zumindest eines lokalen Einbettungs-Modells, welches in einem vorab festgelegten Wertebereich für die Ähnlichkeit liegt,
iv) Abrufen der jeweiligen Menge an lokalen Trainingsbildern anhand des zuvor ermittelten zumindest einen lokalen Einbettungs-Modells von dessen jeweiligen Klient,
v) Trainieren eines bereitgestellten Grund-Modells auf Basis künstlicher Intelligenz mit der zuvor zumindest einen abgerufenen jeweiligen Menge an lokalen Trainingsbildern,
vi) Erfassen eines aktuellen Bildes von einem hergestellten Produkt, welches eine Repräsentation des Objekts umfasst,
vii) Erkennen des Objekts im aktuellen Bild durch Anwendung des Grund-Modells.

3. Verfahren nach dem vorhergehenden Anspruch, wobei das Grund-Modell ein "Residual Neural Network", RNN, ein "deep Convolutional Neural Network", DNN, nach dem Standard der "Visual Geometry Group", VGG, oder ein "EfficientNet" ist.

4. Verfahren nach einem der vorhergehenden Ansprüche, wobei der jeweilige Encoder durch den Encoder eines jeweiligen Autoencoders gebildet ist.

5. Klienten-Server-System zum Erkennen eines Objekts in einem digitalen Bild, umfassend einen Server und zumindest zwei Klienten mit jeweiligen Rechenvorrichtungen, wobei das System dazu eingerichtet ist, das Verfahren nach einem der vorhergehenden Ansprüche auszuführen.

6. Klienten-Server-System nach dem vorhergehenden Anspruch, welches ferner einen bildgebenden Sensor umfasst, welcher dazu eingerichtet ist, ein hergestelltes Produkt als Objekt mithilfe eines digitalen Bilds zu erfassen.

7. Computer-Programm-Produkt, umfassend Befehle, die bei der Ausführung des Programms durch das Klienten-Server-System nach einem der vorhergehenden System-Ansprüche dieses veranlassen, das Verfahren/die Schritte des Verfahrens nach einem der vorhergehenden Verfahrens-Ansprüche auszuführen.
